# EUROPÄISCHE PATENTSCHRIFT

(11) **EP 0 345 529 B1**
(45) Veröffentlichungstag und Bekanntmachung des Hinweises auf die Patenterteilung: **20.01.1993**
(21) Anmeldenummer: 89109314.8
(22) Anmeldetag: 24.05.1989
(51) Int. Cl.: G01G 19/64, G01G 23/37, G01G 23/32

(54) **Elektronische Waage zum Dosieren**
Electronic dosing balance
Balance électronique pour le dosage

(30) Priorität: 04.06.1988 DE 3819075
(43) Veröffentlichungstag der Anmeldung: 13.12.1989
(73) Patentinhaber: SARTORIUS AG, 37075 Göttingen (DE)
(72) Erfinder: Oldendorf, Christian, D-3400 Göttingen (DE); Melcher, Franz-Josef, D-3414 Hardegsen 3 (DE); Berg, Christoph, Dr., D-3400 Göttingen (DE)
(74) Vertreter: Köhler, Rudolf

(56) Entgegenhaltungen:
- EP-A- 0 132 054
- DE-A- 2 349 937
- DE-A- 2 718 769
- DE-A- 3 540 749
- DE-A- 3 735 733
- FR-A- 2 401 404

## Beschreibung

Die Erfindung bezieht sich auf eine elektronische Waage gemäß dem Oberbegriff des Anspruches 1.

Waagen dieser Art sind allgemein bekannt und z.B. in der DE-OS 35 40 749 beschrieben. Zum Dosieren wird dabei der Sollwert über die Eingabetastatur eingegeben und im Sollgewichtsspeicher abgespeichert. Diesen Sollwert subtrahiert die digitale Signalverarbeitungseinheit vom aktuellen Meßwert, so daß die Dosierung beim negativen Sollwert beginnt und bei Null endet.

Aus der DE-OS 37 35 733 (Veröffentlichungstag 3, 5, 89) ist es weiterhin bekannt, Vornullen in der Anzeige zu unterdrücken, also z.B. bei einer 3.000g-Waage und einem Anzeigewert von 43,7 g die Null in der 100g-Dekade, der 1.000g-Dekade und der 10.000g-Dekade zu unterdrücken. Beim Dosieren in der oben angegebenen Weise hat diese Vornullenunterdrückung den Vorteil, daß bei Annäherung an den Wert Null, also den Endwert der Dosierung, durch das Verschwinden zuerst der Ziffern in der 10.000g-Dekade, dann in der 1.000g-Dekade, dann in der 100g-Dekade und schließlich in der 10g-Dekade die Annäherung an den Wert Null guasianalog sichtbar wird, ohne daß die Bedienungsperson bewußt irgendwelche Ziffern ablesen muß. Diese guasianaloge Meßwertdarstellung funktioniert jedoch nicht bei Anzeigen mit mehreren Nachkommastellen, da die Vornullen bei der 0,1g-Dekade, der 0,01g-Dekade etc. nicht einfach unterdrückt werden können.

Es ist auch bekannt (EP-A2-132054), eine kleine Null in der letzten Stelle einer Anzeige als Zeichen eines fluktuierenden Massewertes zu verwenden.

Aufgabe der Erfindung ist es daher, eine elektronische Waage der eingangs genannten Art so auszugestalten, daß auch im Bereich der Nachkommastellen eine quasianaloge Meßwertdarstellung möglich ist.

Erfindungsgemäß wird dies durch den kennzeichnenden Teil des Anspruches 1 erreicht.

Vornullen im Bereich der Nachkommastellen und in der Einer-Dekade werden also als kleine Null "o" dargestellt, statt der allgemein üblichen großen Null "0". Dadurch haben sie nur die halbe Höhe der üblichen Ziffern und es ergibt sich wieder eine quasianaloge Meßwertdarstellung.

In einer vorteilhaften Weiterbildung der Erfindung werden die Schaltmittel nur aktiviert, wenn ein Sollgewicht in den Sollgewichtsspeicher eingegeben worden ist und wenn das Vorzeichen in der Anzeige negativ ist. Damit ist diese quasianaloge Meßwertdarstellung nur beim Dosieren vom negativen Sollwert bis auf Null aktiviert und das Überschreiten des Sollgewichtes (Anzeige von positiven Werten) wird neben dem Vorzeichenwechsel durch das Umschlagen aller Vornullen von "o" auf "0" nochmal unterstrichen.

Die Erfindung wird im folgenden anhand der schematischen Figuren beschrieben. Dabei zeigt:
- Fig. 1: ein Blockschaltbild der elektronischen Waage in einer ersten Ausführungsform,
- Fig. 2: die Anzeige während des Dosierens,
- Fig. 3: ein Blockschaltbild der elektronischen Waage in einer zweiten Ausführungsform und
- Fig. 4: die Anzeige der zweiten Ausführungsform gemäß Fig. 3 in der Umgebung des Nullpunktes.

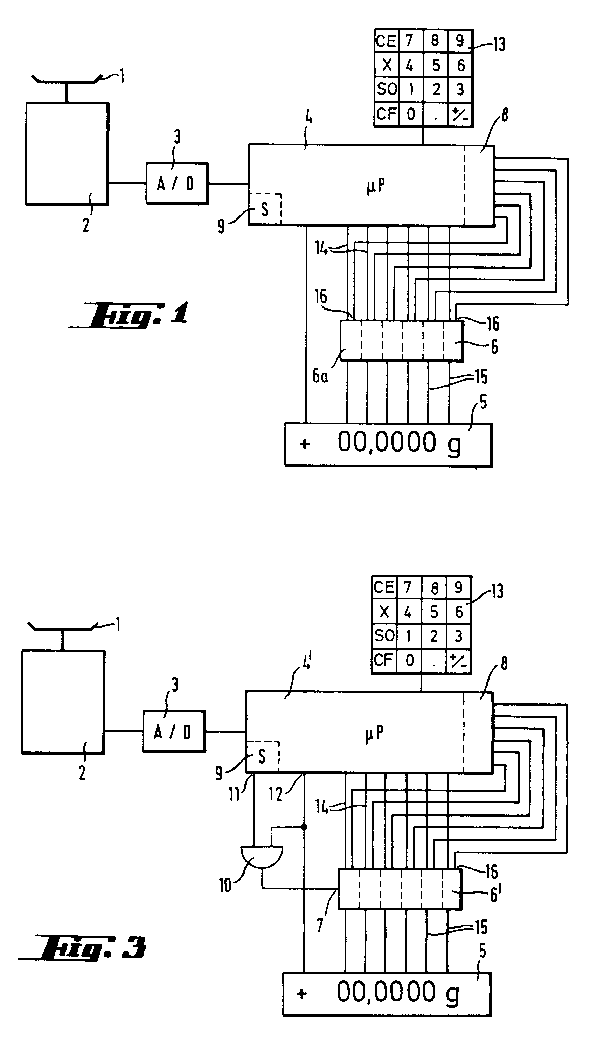

Im Blockschaltbild in Fig. 1 ist der Meßwertaufnehmer 2 der Waage mit der Waagschale 1 nur schematisch angedeutet, da er für das Verständnis der Erfindung unwesentlich ist. Das Ausgangssignal des Meßwertaufnehmers wird im Analog/Digital-Wandler 3 digitalisiert und dann der digitalen Signalverarbeitungseinheit 4 zugeführt. Die digitale Signalverarbeitungseinheit kann z.B. durch einen Mikroprozessor realisiert sein. Der Sollwert wird der digitalen Signalverarbeitungseinheit 4 über eine Eingabetastatur 13 eingegeben und im Sollwertspeicher 9 innerhalb der digitalen Signalverarbeitungseinheit 4 gespeichert. Beim Dosieren wird dieser Wert im Sollwertspeicher 9 vom aktuellen Meßwert vom Meßwertaufnehmer 2 subtrahiert und das Ergebnis in der digitalen Anzeige 5 angezeigt. Zwischen der digitalen Signalverarbeitungseinheit 4 und der digitalen Anzeige 5 befindet sich die Dekodiereinheit 6, die die anzuzeigende Größe von der internen Darstellung in der digitalen Signalverarbeitungseinheit 4 (z.B. BCD-Code) auf die Anzeigedarstellung (z.B. 7-Segment-Code) umkodiert. Der Dekodiereinheit 6 werden die Daten über die Leitungen 14 zugeführt und das umkodierte Ergebnis wird über die Leitungen 15 der Anzeige 5 zugeführt. Weiter weist die Dekodiereinheit 6 zusätzliche Steuereingänge 16 auf, die für die Dekodierung der Ziffer Null wichtig sind: Ohne ein Signal auf dem Steuereingang 16 wandelt der Dekodierer die Ziffer Null in die übliche Darstellung "0" um. Mit einem Signal auf dem Steuereingang 16 wandelt der Dekodierer 6a für die 10er-Dekade die Null in die Leeranzeige (kein Segment aktiviert) um. Dies ergibt die bekannte Vornullenunterdrückung. Die restlichen Dekaden des Dekodierers 6 wandeln bei Anliegen eines Signals auf dem entsprechenden Steuereingang 16 die Null in das Symbol "o" um.

Die Ansteuerung der Steuereingänge 16 übernimmt ein Schaltungsteil 8 innerhalb der digitalen Signalverarbeitungseinheit 4. In diesem Schaltungsteil 8 wird festgestellt, welches die höchstwertige Dekade ist, in der eine Ziffer ungleich Null steht; für diese Dekade und für alle weiter rechts stehenden Dekaden wird dann kein Signal für die Steuereingänge 16 abgegeben, während für alle weiter links stehenden Dekaden ein Steuersignal abgegeben wird.

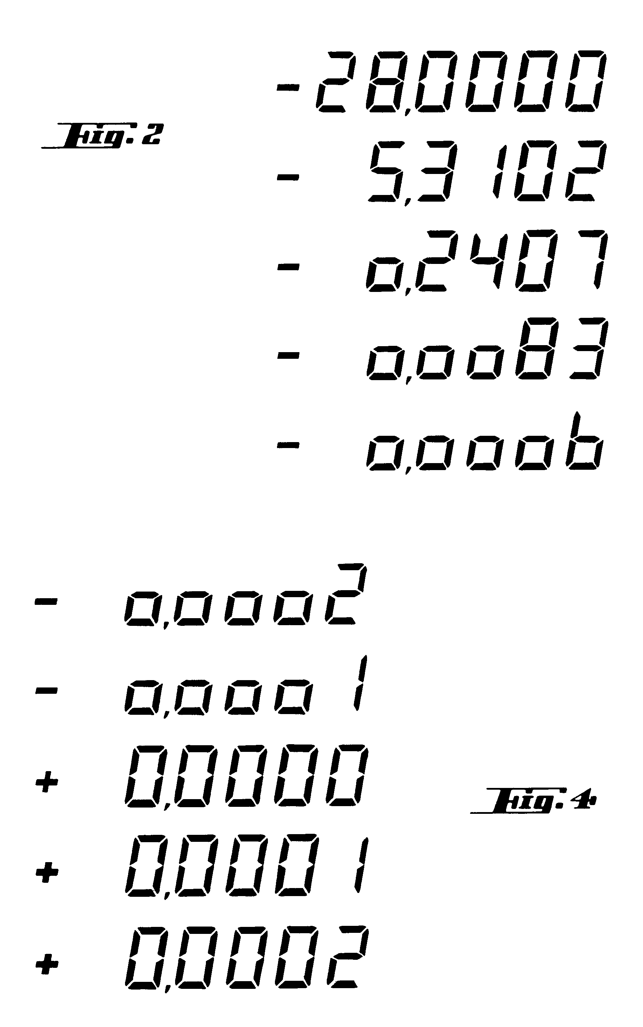

Gemäß den in Fig. 2 gezeichneten Beispielen wird also bei einem Anzeigewert von 28,0000 g auf keine der Steuereingänge 16 ein Signal gegeben, da die 10g-Dekade die höchstwertige Dekade ist, in der eine Ziffer ungleich Null steht. Beim Anzeigewert von 5,3102 g ist die 1g-Dekade die höchstwertige Dekade, in der eine Ziffer ungleich Null steht, so daß nur auf den Steuereingang 16 der 10g-Dekade ein Signal gegeben wird; dies bewirkt die Unterdrückung der Null in der 10g-Dekade. Beim Anzeigewert 0,2407 g ist die 0,1g-Dekade die höchstwertige Dekade, in der eine Ziffer ungleich Null steht, so daß auf die Steuereingänge 16 der 10g-Dekade und der 1g-Dekade ein Signal gegeben wird; dies bewirkt in der 10g-Dekade die Unterdrückung der Null und in der 1g-Dekade die Null-Darstellung als "o". Beim Anzeigewert 0,0083 g ist die 0,001g-Dekade die höchstwertige Dekade, in der eine Ziffer ungleich Null steht, so daß auf die Steuereingänge 16 der 0,01g-Dekade und aller weiter links stehenden Dekaden ein Signal gegeben wird; dies bewirkt die Unterdrückung der Null in der 10g-Dekade und die Null-Darstellung als "o" in der 1g-Dekade, der 0,1g-Dekade und der 0,01g-Dekade. Das letzte Beispiel in Fig. 2 mit einem Anzeigewert von 0,0006 g ergibt sich sinngemäß.

Bei einer Dosierung von z.B. 28,0000 g erscheint also zuerst dieser Wert mit einem negativen Vorzeichen in der Anzeige. Beim allmählichen Zudosieren von Substanz nimmt der angezeigte negative Wert allmählich ab und die in Fig. 2 untereinander gezeigten Beispiele sind willkürlich herausgegriffene Zwischenzustände der Dosierung, wobei der letzte Wert mit -0,0006 g schon fast den Endpunkt der Dosierung darstellt. Man erkennt, daß zuerst durch den Wegfall der 10g-Dekade der Fortgang der Dosierung quasi-analog dargestellt wird und dann bei der 1g-Dekade und den weiter rechts befindlichen Dekaden durch den Übergang von den Ziffern in voller Höhe auf die nur halb hohe "o".

In Fig. 3 ist eine zweite Ausführungsform der Schaltung gezeigt. Gleiche Schaltungsteile wie in Fig. 1 sind mit den gleichen Bezugszahlen gekennzeichnet. Diese zweite Ausführungsform unterscheidet sich nur durch das zusätzliche Und-Tor 10, das an seinen beiden Eingängen ein Signal erhält, wenn am Ausgang 12 der digitalen Signalverarbeitungseinheit 4′ ein Signal für das Minus-Zeichen in der digitalen Anzeige 5 anliegt und wenn am Ausgang 11 die Belegung des Sollgewichtsspeichers 9 signalisiert wird. Nur wenn beide Signale am Und-Tor 10 anliegen, gibt es ein Ausgangssignal an den Eingang 7 der Dekodierschaltung 6′ ab. Dieser Eingang 7 ist ein zusätzlicher Aktivierungseingang für die Steuereingänge 16: Ein Signal auf den Steuereingängen 16 wird in dieser Ausführungsform erst wirksam, wenn auch ein Signal auf dem Eingang 7 anliegt. Das hat zur Folge, daß die Vornullen nur dann als "o" dargestellt werden, wenn erstens der Sollwertspeicher mit einem zu dosierenden Gewichtswert belegt ist und wenn zweitens der Anzeigewert negativ ist. Dadurch erfolgt die Darstellung des Ergebnisses in der üblichen Form, wenn die Waage nicht zum Dosieren benutzt wird oder wenn positive Werte angezeigt werden.

Die Anzeige positiver Werte in der üblichen Form mit großen Nullen "0" ergibt nochmal - neben dem Vorzeichen - eine Unterscheidung positiver und negativer Werte in der Anzeige. Beim Dosieren ist dies vorteilhaft, da am Schluß der Dosierung das Hauptaugenmerk der Bedienungsperson auf den Dekaden ganz rechts liegt und damit das Vorzeichen, das weit links liegt, leicht aus dem Auge gelassen wird. Das Ende einer Dosierung und der Beginn des Überfüllens ist in Fig. 4 gezeigt. Zuerst fehlen noch 0,0002 g am Sollgewicht, dann noch 0,0001 g; im dritten Beispiel ist der Sollwert erreicht und in den folgenden Beispielen sind 0,0001 g bzw. 0,0002 g überdosiert. Die Bedienungsperson erkennt also das Erreichen des Sollwertes und den Beginn der Überfüllung nicht nur am Vorzeichen ganz links, sondern auch am Übergang von der kleinen Null "o" auf die große Null "0", und dies unmittelbar neben der letzten Dekade, auf die das Hauptaugenmerk gerichtet ist.

Der Dekodierer 6 und das Tor 10 sind im vorstehenden der Deutlichkeit halber als getrennte Bauelemente gezeichnet und beschrieben. Selbstverständlich können sie - genauso wie die anderen Funktionen der digitalen Signalverarbeitungseinheit 4 bzw. 4′ - auch durch entsprechende Programmbefehle innerhalb der digitalen Signalverarbeitungseinheit 4 bzw. 4′ realisiert sein.

## Patentansprüche

1. Elektronische Waage zum Dosieren, mit einem Meßwertaufnehmer (2), mit einer digitalen Signalverarbeitungseinheit (4,4′), mit einer digitalen Eingabetastatur (13) zur Eingabe des Sollwertes einer Dosierung, mit einem Sollgewichtsspeicher (9) und mit einer digitalen Anzeigeeinheit (5) mit mehreren Nachkommastellen, dadurch gekennzeichnet, daß Schaltmittel (8) vorhanden sind, die die höchstwertige Dekade festellen, in der in der Anzeige (5) eine Ziffer ungleich Null steht, und daß diese Schaltmittel (8) die Dekodierung (6) der Anzeige so steuern können, daß alle Nullen links von dieser Dekade -"Vornullen"- bis zur Einer-Dekade als kleine Null "o" darstellbar sind, während Vornullen in der 10er-Dekade, 100er-Dekade etc. in bekannter Weise ganz unterdrückt sind.

2. Elektronische Waage zum Dosieren nach Anspruch 1, dadurch gekennzeichnet, daß die Schaltmittel (8) nur aktiviert werden, wenn ein Sollgewicht in den Sollgewichtsspeicher (9) eingegeben worden ist und wenn das Vorzeichen in der Anzeige (5) negativ ist.

## Claims

1. Electronic weighing machine for metering, comprising a measurement value pick-up (2), a digital signal processing unit (4, 4'), a digital input keyboard (13) for input of the target value of a metering, a target weight store (9), and a digital indicating unit (5) with several decimal places, characterised thereby that circuit means (8) are present, which establish the highest value decade in which a numeral unequal to zero stands in the indicator (5), and that these circuit means (8) can so control the decoder (6) of the indicator that all zeros to the left of this decade - "lead zeros" - can be represented as a small zero "o" as far as the units decade, while the lead zeros in the 10's decade, 100's decade, etc, are in known manner entirely suppressed.

2. Electronic weighing machine for metering according to claim 1, characterised thereby that the circuit means (8) are activated only if a target weight in the target weight store (9) has been put in and if the sign in the indicator (5) is negative.

## Revendications

1. Balance électronique pour le dosage, comportant un transducteur (2), une unité numérique de traitement de signaux (4,4'), un clavier numérique d'entrée (13) pour l'introduction de la valeur de consigne d'un dosage, une mémoire de poids de consigne (9) et une unité d'affichage (5) à plusieurs décimales, caractérisée en ce qu'il est prévu des dispositifs de commutation (8), qui déterminent la décade supérieure dans laquelle un chiffre différent de zéro est affiché et en ce que ces dispositifs de commutation (8) peuvent commander le décodage (6) de l'affichage, de manière que tous les zéros à gauche de cette décade "zéros précédents" jusqu'à la décade des unités sont représentés par des petits zéros "o", tandis que les zéros précédents sont, dans la décade des dizaines, des centaines, etc. totalement éliminés de manière connue.

2. Balance électronique pour le dosage selon la revendication 1, caractérisée en ce que les dispositifs de commutation (8) ne sont activés que si un poids de consigne a été fourni à la mémoire (9) de poids de consigne et que dans l' unité d'affichage (5) le signe est négatif.
